# EUROPÄISCHE PATENTSCHRIFT

(11) **EP 1 904 282 B1**
(45) Veröffentlichungstag und Bekanntmachung des Hinweises auf die Patenterteilung: **18.05.2011**
(21) Anmeldenummer: 06761786.0
(22) Anmeldetag: 06.07.2006
(51) Int. Cl.: B29C 37/02, B23D 79/00

(54) **VORRICHTUNG UND VERFAHREN ZUM ENTFERNEN EINES LÄNGS ERSTRECKTEN GRATES AN EINEM FORMTEIL**
DEVICE AND METHOD FOR REMOVING AN OBLONG BURR FROM A MOULDED PART
DISPOSITIF ET PROCEDE POUR ELIMINER UNE BAVURE OBLONGUE SUR UNE PIECE MOULEE

(30) Priorität: 19.07.2005 DE 102005034627
(43) Veröffentlichungstag der Anmeldung: 02.04.2008
(73) Patentinhaber: Takata-Petri AG, 63743 Aschaffenburg (DE)
(72) Erfinder: VÄTH, Norbert, 97839 Esselbach (DE)
(74) Vertreter: Baumgärtel, Gunnar
(86) Internationale Anmeldenummer: PCT/DE2006/001188
(87) Internationale Veröffentlichungsnummer: WO 2007/009429

(56) Entgegenhaltungen:
- DE-A1- 3 245 833
- DE-A1- 19 804 265
- US-A- 4 518 551
- US-A- 4 535 223

## Beschreibung

Die Erfindung betrifft eine Vorrichtung zum Entfernen eines längs erstreckten Grates an einem Formteil nach dem Anspruch 1 sowie ein Verfahren zur Entfernung eines längs erstreckten Grates an einem Formteil nach dem Anspruch 19.

Eine solche Vorrichtung umfasst als wesentliche Elemente eine Energiequelle, die zum Entfernen des Grates durch Schmelzen oder Verbrennen des Grates Energie in den Grat einbringt, wobei die Energiequelle einen Austrittsbereich aufweist, durch den hindurch Energie in Richtung des Grates transportierbar ist.

Die US-A-4 535 223 betrifft eine vorrichtung gemäß dem Oberbegriff des Anspruchs 1 zum Entfernen eines Grates am äußeren Umfang einer spritzgegossenen Schallplatte, wobei die Schallplatte auf einem rotierbaren Teller angeordnet ist, so dass der äußerer Umfang der Schallplatte zur Entfernung des Grates an einer fokussierten Infrarotquelle entlang rotieren kann.

Die DE 32 45 833 A1 beschreibt ein Verfahren, bei dem ein zu entfernender Grat der Randkontur eines Formteiles in einer ringförmigen Brennkammer angeordnet wird, die lediglich die besagte Randkontur einschließt. Zum entfernen des Grates wird ein Zündgas in die Brennkammer eingeleitet und gezündet

Grate entstehen bei Herstellungsprozessen von Formteilen, z.B. beim Gießen von Kunststoff in einem eine Werkzeugteilung aufweisenden Werkzeug. Ein solches Werkzeug wird zur Herstellung des Formteiles entlang der Werkzeugteilung zusammengesetzt und bildet hierdurch eine Negativform aus, in die ein fließfähiger, Werkstoff eingebracht wird, der in dem Werkzeug aushärtet oder erstarrt.

Hierbei legt sich der fließfähige Werkstoff im Innern des Werkzeuges in durch die Werkzeugteilung gebildete Fugen des Werkzeuges und bildet somit beim Aushärten oder Erstarren einen entlang der Werkzeugteilung verlaufenden längs erstreckten Grat aus. Weiterhin kann eine Strukturierung einer Oberfläche einer dem Formteil zugewandten Wandung der Negativform, welche beispielsweise zum Ausbilden genarbter Oberflächen an dem Formteil dient, eine solche Gratbildung begünstigen. Oftmals liegen derartige Grate an sichtbaren Bereichen oder Griffbereichen eines Formteiles und werden von einem Konsumenten als störend empfunden. Ferner werden durch jene Grate Sammelbereiche für Lacke bei einem Lackiervorgang gebildet, so dass ein gleichmäßiger Farb- bzw. Lackauftrag nicht realisierbar ist. Eine Entfernung der an einem Formteil ausgebildeten Grate ist daher notwendig.

In bekannten Vorrichtungen und Verfahren geschieht dies mit Hilfe von mechanischen Entgratungswerkzeugen in Form von Messern oder Fräsen, mittels derer der Grat mechanisch entfernt wird, beispielsweise durch ein Abschneiden oder Abschleifen des Grates, sowie unter Verwendung von Entgratungswerkzeugen zur Erzeugung von Heißluft oder offenen Flammen, die zum Entfernen des Grates durch Schmelzen des Grates eingesetzt werden. Die vorstehend genannten Entgratungswerkzeuge können zur Entfernung eines Grates manuell oder automatisiert (Roboter) entlang des Grates geführt werden. Hierbei besteht allerdings der Nachteil, dass einerseits eine manuelle, also händische Führung eines solchen Entgratungswerkzeuges zu Lasten der Reproduzierbarkeit eines Entgratungsprozesses geht und andererseits eine automatisierte Führung des Entgratungswerkzeuges bei einem längs erstreckten Verlauf des Grates entsprechend aufwendig und kostenintensiv ausfällt.

Der Erfindung liegt daher das Problem zu Grunde, eine Vorrichtung und ein Verfahren zur Entfernung eines längs erstreckten Graten an einem Formteil bereitzustellen, die eine kostengünstige und präzise Entfernung des Grates ermöglichen.

Dieses Problem wird durch eine Vorrichtung mit den Merkmalen des Anspruchs 1 und ein Verfahren mit den Merkmalen des Anspruchs 19 gelöst.

Danach ist bei einer erfindungsgemäßen Vorrichtung der Austrittsbereich der Energiequelle derart längs erstreckt ausgebildet, dass er entlang des längs erstreckten Grates, einer Bahn des Grates folgend, anordenbar ist. Dies löst das erfindungsgemäße Problem, da somit sicher gestellt ist, dass die Energie auf Grund einer den längs erstreckten Grat flankierenden Anordnung des Austrittsbereiches derart zum Schmelzen oder Verbrennen des Grates in den Grat einbringbar ist, dass eine aufwändige Führung eines Entgratungswerkzeuges entlang des Grates verzichtbar ist. Ferner ist die Entfernung des Grates reproduzierbar, da der längs erstreckte Grat bei einem Entgratungsprozess, d.h., bei einem Entfernen des längs erstreckten Grates, eine definierte Lage bezüglich des Austrittsbereiches einnimmt. Je nach Auslegung der Energiequelle kann die erfindungsgemäße Vorrichtung zur Entfernung von Graten an Formteilen aus unterschiedlichen Werkstoffen wie beispielsweise Kunststoff oder auch Leichtmetallen wie Aluminium oder Magnesium verwendet werden.

In einer bevorzugten Ausführungsform der Erfindung ist der Austrittsbereich gekrümmt, so dass er entlang eines längs erstreckten Grates, einer gekrümmten Bahn des Grates folgend, anordenbar ist. Oder anders gesagt, der Austrittsbereich folgt einem Verlauf des längs erstreckten Grates. Vorzugsweise schließt der Austrittsbereich hierbei einen Winkel von mindestens 180° ein. Das heißt, der Austrittsbereich ist derart ausgebildet, dass ein gekrümmter, längs erstreckter Grat durch den Austrittsbereich in einer Erstreckungsrichtung des Grates um mindestens 180° umgreifbar ist.

Unter einem längs erstreckten Element (Grat, Austrittsbereich usw.), wird hierbei ein Element verstanden, das sich entlang einer Bahnkurve erstreckt, wobei die Ausdehnung des Körpers in den zwei unabhängigen Raumrichtungen, welche an einem beliebigen Punkt der Bahnkurve jeweils senkrecht zur Bahnkurve orientiert sind, kleiner ist, als entlang der Bahn. Die Erstreckungsrichtung eines solchen Elementes verläuft an jedem Punkt der Bahnkurve, entlang derer sich das Element erstreckt, jeweils tangential zur Bahnkurve.

In einer alternativen Variante der Erfindung ist vorgesehen, dass sich der Austrittsbereich entlang einer geschlossenen Bahnkurve erstreckt. Dies ist vorteilhaft, da an Formteilen ausgebildete längs erstreckte Grate in der Regel in sich geschlossen ausgebildet sind. Durch eine entsprechende in sich geschlossene Ausbildung des Austrittsbereiches, ist dieser derart bezüglich des längs erstreckten Grates anordenbar, dass er sich entlang des gesamten Grates in der Erstreckungsrichtung des Grates erstreckt.

In einer weiteren Variante der Erfindung ist vorgesehen, dass der Austrittsbereich einen Winkel von 360° einschließt. Hierbei kann sich der Austrittsbereich entlang einer geschlossenen Bahnkurve erstrecken. Es ist aber auch möglich, dass der längs erstreckte Austrittsbereich sich mit zwei freien Endabschnitten lediglich so überschneidet, dass der Austrittsbereich einen Winkel von 360° einschließt. Hierbei wären die beiden freien Endabschnitte voneinander beabstandet. Dies ist vorteilhaft, da beispielsweise bei einer Energiequelle, welche eine Glashülle aufweist, entlang deren Oberfläche sich der Austrittsbereich erstreckt, der um 360° gebogene Verlauf des Austrittsbereiches durch einfaches Verformen einer linear längs erstreckten Glashülle herstellt werden kann.

Vorzugsweise ist der Austrittsbereich der Energiequelle längs erstreckt in einer Erstreckungsrichtung ausgebildet, so dass er senkrecht zur Erstreckungsrichtung in einem konstanten Abstand zum Grat anordenbar ist. Hierbei kann jener Abstand im Bereich von fünf bis 25 Millimetern liegen. Ein solcher konstanter Abstand zum längs erstreckten Grat ist vorteilhaft, da somit bei einem in Erstreckungsrichtung homogen ausgebildeten Grat das Entfernen des Grates durch Einbringen von Energie in den Grat eine homogene, d.h., gleichmäßige Oberflächenbeschaffenheit des Formteiles entlang des Bereiches erzeugt, an dem der Grat vor seiner Entfernung ausgebildet war.

Bevorzugt ist die Energiequelle derart ausgebildet, dass ein Transport der Energie zum Formteil mittels der Energiequelle auf den Grat konzentrierbar ist. Die Energiequelle kann hierbei insbesondere derart ausgebildet sein, dass an den Grat angrenzende Bereiche des Formteiles nicht direkt durch die Energiequelle erwärmt werden.

In einem besonders bevorzugten Ausführungsbeispiel der Erfindung ist vorgesehen, dass die Energiequelle dazu ausgebildet ist, Energie in Form von IR-Strahlung auf den längs erstreckten Grat einzustrahlen. Hierzu weist die Energiequelle einen IR-Strahler auf. Vorzugsweise ist der IR-Strahler als ein längs erstreckter Draht ausgebildet, der beispielsweise durch Anlegen einer Spannung zur Emission von IR-Strahlung angeregt werden kann, wobei der IR-Strahler bevorzugt längs erstreckt entlang des Austrittsbereiches der Energiequelle verläuft.

In einer bevorzugten Variante der Erfindung weist die Energiequelle eine Hülle zur Aufnahme des IR-Strahlers auf, mit einer dem IR-Strahler zugewandten Innenseite und einer dem IR-Strahler abgewandten Außenseite. Vorzugsweise ist jene Hülle aus einem Glas gefertigt und weist bevorzugt eine äußere Beschichtung, mit einer dem Außenraum zugewandten Oberfläche und einer dem IR-Strahler zugewandten Innenseite auf, die die Hülle zumindest teilweise umgibt. Bevorzugt wird hierbei der Austrittsbereich durch einen Spalt in der äußeren Beschichtung gebildet. Hierzu kann zunächst die äußere Beschichtung derart auf die Hülle aufgebracht werden, dass die Hülle vollständig von der äußeren Beschichtung umschlossen ist. Danach kann die äußere Beschichtung partiell entfernt werden, so dass ein in einer Erstreckungsrichtung längs erstreckter Spalt entsteht, der den Austrittsbereich der Energiequelle bildet.

In einer Variante der Erfindung ist vorgesehen, dass eine von der Energiequelle ausgesandte IR-Strahlung mittels eines strahlformenden Elementes derart bündelbar ist, dass lediglich der Grat durch die IR-Strahlung bestrahlt wird. Unter einem strahlformenden Element wird hierbei ein Element verstanden, welches auf die Ausbreitung einer Strahlung Einfluss nimmt (Blenden, Linsen usw.). Auf diese Weise kann die durch die Strahlung transportierte Energie präzise in den Grat eingebracht werden, so dass ein durch die Bestrahlung induzierte Schmelzvorgang des längs erstreckten Grates nicht zum Grat benachbarte Bereiche des Formteiles durch Energietransport zu jenen Bereichen (und dadurch Erwärmung dieser Bereiche) in Mitleidenschaft zieht (d.h., durch Erwärmen verformt). Bevorzugt ist deshalb eine von der Energiequelle ausgesandte IR-Strahlung mittels des strahlformenden Elementes auf einen den Grat beinhaltenden Entfernungsbereich des Formteiles beschränkbar, so dass der längs erstreckte Grat durch Einbringen von Energie definiert mit dem Entfernungsbereich verschmelzbar ist. Der Grat kann natürlich auch durch Einbringen von Energie verbrannt und dadurch entfernt werden.

Vorzugsweise ist das strahlformende Element durch den Spalt in der äußeren Beschichtung der Hülle gebildet. D. h., je nach Spaltbreite, worunter der Abstand der den Spalt begrenzenden Ränder der äußeren Beschichtung senkrecht zur Erstreckungsrichtung des Spaltes verstanden wird, kann ein mehr oder weniger großer, den Grat beinhaltender Entfernungsbereich des Formteiles mit der IR-Strahlung bestrahlt werden.

In einer Variante der Erfindung ist die Innenseite der äußeren Beschichtung als ein Reflektor zum Reflektieren einer von dem IR-Strahler ausgesandten IR-Strahlung ausgebildet, der einer Absorption der IR-Strahlung an der Innenseite der äußeren Beschichtung der Hülle entgegenwirkt. Vorzugsweise besteht die äußere Beschichtung aus Gold und/oder einer Goldlegierung.

In einem weiteren Ausführungsbeispiel der Erfindung, ist ein Halteelement vorgesehen, mittels dessen das Formteil mit seinem längs erstreckten Grat in einer vordefinierbaren Lage bezüglich des Austrittsbereiches der Energiequelle gehalten werden kann.

Ein weiterer Gedanke der Erfindung ist die Bereitstellung einer Anordnung, mit einer erfindungsgemäßen Vorrichtung zum Entfernen eines längs erstreckten Grates an einem Formteil, wobei das Formteil derart bezüglich des Austrittsbereiches der Energiequelle angeordnet ist, dass der Austrittsbereich, einer Bahn des längs erstreckten Grates folgend, entlang des Grates verläuft. Vorzugsweise ist der Grat in einer Erstreckungsrichtung längs erstreckt ausgebildet und in Erstreckungsrichtung in sich geschlossen. Bevorzugt verläuft der Grat hierbei in einer Umfangsrichtung des Formteiles entlang der Oberfläche des Formteiles.

Bevorzugt ist bei der erfindungsgemäßen Anordnung das Formteil als eine Airbagabdeckung ausgebildet, die beispielsweise aus einem Kunststoff gefertigt sein kann.

Weiterhin wird das erfindungsgemäße Problem durch ein Verfahren zum Entfernen eines längs erstreckten Grates an einem Formteil gelöst.

Bei dem erfindungsgemäßen Verfahren wird ein Formteil mit einem längs erstreckten Grat bereitgestellt und bezüglich einer Energiequelle in einer Bearbeitungsposition derart positioniert, dass ein dem Grat zugewandter, in einer Erstreckungsrichtung verlaufender Austrittsbereich der Energiequelle, durch den hindurch die Energie zum Grat transportiert werden kann, längs erstreckt entlang des Grates verläuft und der Grat durch Einbringen der Energie in den Grat entlang des Austrittsbereiches entfernt.

Dies löst das erfindungsgemäße Problem, da durch das Einbringen von Energie entlang des Grates der Grat reproduzierbar entfernt wird und weiterhin durch die Anordnung des Austrittsbereiches entlang des Grates auf eine komplizierte Führung eines Entgratungswerkzeuges entlang des Grates verzichtet werden kann. Weiterhin ist vorteilhaft, dass mit dem erfindungsgemäßen Verfahren Grate aus einer Vielzahl von Werkstoffen (z.B. Kunststoffen, aber auch Leichtmetallen wie Aluminium oder Magnesium) entfernt werden können.

Bevorzugt wird die Energie durch die Energiequelle gleichzeitig auf eine gesamte Länge des Grates übertragen.

In einer bevorzugten Variante des erfindungsgemäßen Verfahrens ist vorgesehen, dass der Grat derart bezüglich der Energiequelle in der Bearbeitungsposition positioniert wird, dass der Austrittsbereich senkrecht zur Erstreckungsrichtung eine im Wesentlichen konstante Beabstandung zum Grat aufweist. Eine derartige Beabstandung ist typischerweise im Bereich von fünf bis 25 Millimetern angesiedelt.

Bevorzugt wird gemäß des erfindungsgemäßen Verfahrens die Energie derart auf das Formteil übertragen, dass die Energie hierbei auf den Grat konzentriert wird. Hierdurch kann der Grat mit einem senkrecht zur Erstreckungsrichtung des Grates schmal ausgebildeten, den Grat beinhaltenden Entfernungsbereich verschmolzen werden (der Entfernungsbereich ist also ein Oberflächenbereich des Formteiles, von dem der Grat absteht). Zum Entfernungsbereich benachbarte Bereiche des Formteiles können somit von einer direkten Erwärmung durch Energieeinwirkung ausgenommen werden.

In einer besonders bevorzugten Variante des erfindungsgemäßen Verfahrens wird der Grat mittels der Energiequelle mit einer IR-Strahlung bestrahlt. Bevorzugt wird hierbei der den Grat beinhaltende Entfernungsbereich des Formteiles derart mit IR-Strahlung bestrahlt, dass der Grat mit dem Entfernungsbereich verschmolzen und dadurch entfernt wird.

Weiterhin wird bevorzugt die IR-Strahlung derart auf den Grat fokussiert, dass lediglich der Grat mit der IR-Strahlung bestrahlt wird. Hierbei wird bevorzugt der Grat verbrannt oder mit einem den Grat beinhaltenden Entfernungsbereich des Formteiles verschmolzen. Hierbei kann der Grat beispielsweise derart bestrahlt werden, dass er in Folge einer dadurch induzierten Erwärmung fließfähig wird und sich flächig auf dem Entfernungsbereich ausbreitet.

In einer weiteren Variante des erfindungsgemäßen Verfahrens ist vorgesehen, dass das Formteil in die Bearbeitungsposition geführt wird, das Formteil in der Bearbeitungsposition mittels eines Halteelementes gehalten wird und der Grat mittels der IR-Strahlung bestrahlt wird.

Vorzugsweise wird bei dem erfindungsgemäßen Verfahren das Formteil mittels eines Führungsmittels in die Bearbeitungsposition geführt. Hierbei kann es sich um ein vollständig automatisiertes Führungsmittel handeln, beispielsweise einen Roboter.

Die dargestellten Merkmale und Vorteile der Erfindung sollen anhand der nachfolgenden Beschreibungen von Figuren von Ausführungsbeispielen verdeutlicht werden.

Es zeigen:
- Figur 1: eine schematische Schnittdarstellung einer Vorrichtung zum Entfernen eines längs erstreckten Grates an einem Formteil sowie ein Formteil und einem daran ausgebildeten, längs erstreckten Grat,
- Figur 2: eine perspektivische, schematische Ansicht einer Vorrichtung zum Entfernen eines längs erstreckten Grates an einem Formteil mit einer Energiequelle und einem Halteelement,
- Figur 3: eine schematische, perspektivische Ansicht einer Vorrichtung der in der Figur 2 beschriebenen Art, mit einem durch das Haltelement gehaltenen Formteil,
- Figur 4: eine weitere schematische, perspektivische Ansicht einer Vorrichtung der in der Figur 2 und Figur 3 beschriebenen Art.
- Figur 4a: eine schematische, perspektivische Ansicht eines Details einer Vorrichtung der in der Figur 4 beschriebenen Art.

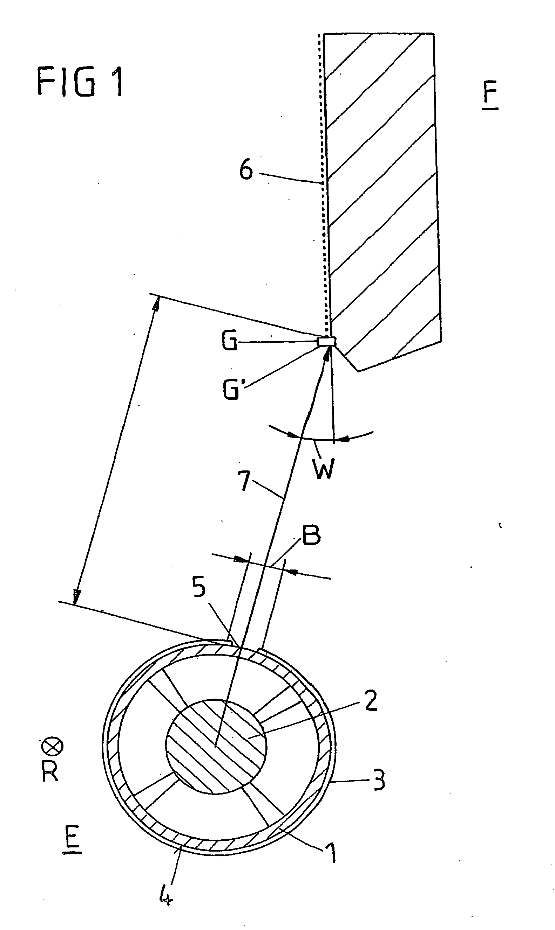

Die Figur 1 zeigt eine schematische Schnittansicht einer Vorrichtung zum Entfernen eines längs erstreckten Grates G an einem Formteil F. Die Vorrichtung weist eine in einer Erstreckungsrichtung R längs erstreckt verlaufende Energiequelle E auf, mit einer Hülle 1 in Form einer in Erstreckungsrichtung R längs erstreckt verlaufenden, zylindrischen Glasröhre, die in einer Querschnittsebene, welche senkrecht zur Erstreckungsrichtung R verläuft, eine kreisförmige Querschnittskontur aufweist. Die besagte Querschnittsebene fällt mit der Papierebene zusammen. Die Hülle 1 bildet eine Aufnahme für einen in Erstreckungsrichtung R längs erstreckt verlaufenden IR-Strahler 2, der quer zur Erstreckungsrichtung R konzentrisch in der Hülle 1 angeordnet ist. Auf einer dem IR-Strahler 2 abgewandte Außenseite der Hülle 1 ist eine aus Gold bestehende äußere Beschichtung 3 aufgebracht. Eine solche äußere Beschichtung 3 kann beispielsweise durch Bedampfen der Außenseite der Hülle 1 mit Gold realisiert werden.

Die auf die Hülle 1 aufgebrachte äußere Beschichtung 3 weist eine dem IR-Strahler 2 zugewandte Innenseite 4 auf, die zum Reflektieren einer von dem IR-Strahler ausgesandten IR-Strahlung 7 dient sowie einen in Erstreckungsrichtung R längs erstreckt ausgebildeten Spalt 5, der einen Austrittsbereich für die von dem IR-Strahler 2 erzeugte IR-Strahlung 7 bildet. Eine senkrecht zur Erstreckungsrichtung R gemessene Spaltbreite B des Spaltes 5 liegt typischerweise im Millimeterbereich. Bei einer Herstellung der Energiequelle E kann der Spalt 5 dadurch erzeugt werden, dass entweder ein Bereich, an dem der Spalt 5 entstehen soll, vor einem Bedampfen der Hülle 1 mit Gold geeignet abgedeckt wird oder durch partielles Abtragen einer die Hülle 1 vollständig umschließenden äußeren Beschichtung 3.

Die Energiequelle E ist nun derart bezüglich des Formteiles F angeordnet, dass der an der äußeren Beschichtung 3 der Hülle 1 ausgebildete Spalt 5 einem in Erstreckungsrichtung R längs erstreckt verlaufenden Grat G des Formteiles F gegenüber liegt. Der Grat G ist in einer senkrecht zur Erstreckungsrichtung R verlaufenden Querschnittsebene rechteckförmig ausgebildet und steht in einer senkrecht zur Erstreckungsrichtung R orientierten Richtung, welche parallel zu einer Normalen einer planen, genarbten Oberfläche 6 des Formteiles F orientiert ist, von einem in Erstreckungsrichtung R verlaufenden Rand der Oberfläche 6 ab, so dass eine in Erstreckungsrichtung R längs erstreckt verlaufende Seite G' des Grates G dem Spalt 5 zugewandt ist.

Weiterhin ist der Spalt 5 derart längs erstreckt entlang des Grates G angeordnet, dass der Grat G in einer senkrecht zur Erstreckungsrichtung R verlaufenden Richtung zwischen dem Spalt 5 und der genarbten, planen Oberfläche 6 des Formteiles F lokalisiert ist. Eine von dem IR-Strahler 2 erzeugte und radial emittierte, d. h., senkrecht zur Erstreckungsrichtung R ausgestrahlte IR-Strahlung 7 (schematisch gekennzeichnet durch einen Pfeil), tritt durch den Spalt 5 in der äußeren Beschichtung 3 der Hülle 1 der Energiequelle E hindurch und trifft auf die dem Spalt 5 zugewandte Seite G' des längs erstreckten Grates G auf. Der Spalt 5 schränkt dabei einen Strahlengang der IR-Strahlung 7 derart ein, dass die IR-Strahlung 7 lediglich die besagte Seite des längs erstreckten Grates G bedeckt. Die aus dem Spalt 5 austretende IR-Strahlung 7 bildet einen zwischen dem Spalt 5 und dem längs erstreckten Grat G aufgespannten Lichtvorhang. Oder anders gesagt, der Spalt 5, d.h., der Austrittsbereich der Energiequelle E, verläuft derart in Erstreckungsrichtung R entlang des in Erstreckungsrichtung R längs erstreckten Grates G, dass die gesamte, dem Spalt 5 zugewandte Seite G' des Grates G gleichzeitig mit IR-Strahlung 7 bestrahlbar ist. Der durch die IR-Strahlung 7 unter Einwirkung des Spaltes 5 gebildete Lichtvorhang verläuft dabei in einer Ebene, die mit der Erstreckungsebene der Oberfläche 6 des Formteiles F einen Winkel W einschließt, der typischerweise im Bereich von etwa 5 bis 25 Grad liegt.

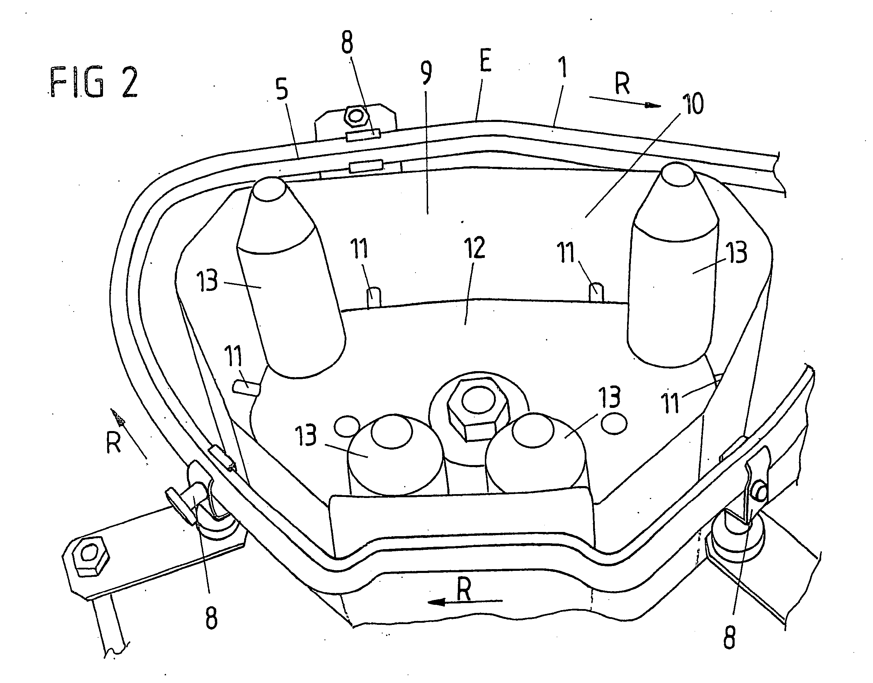

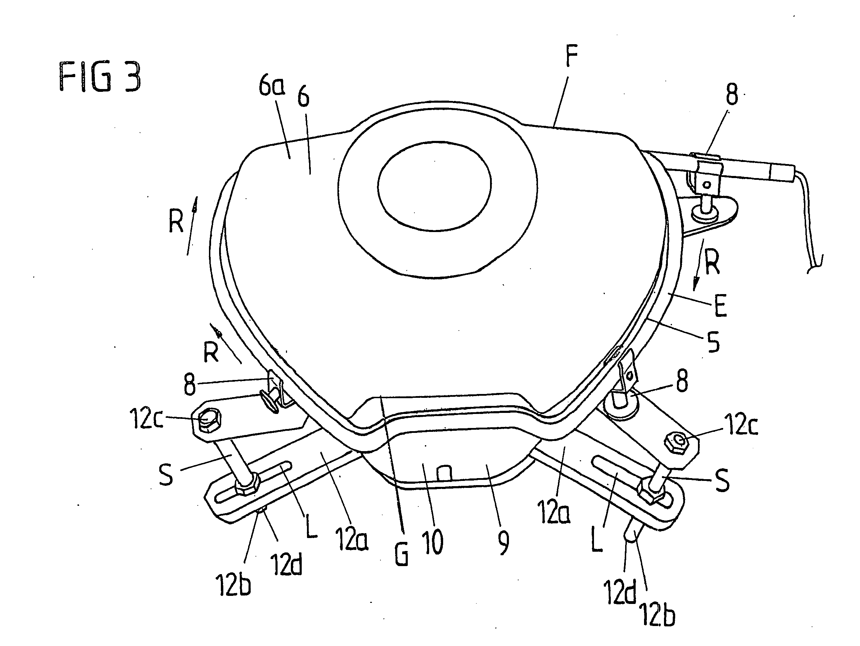

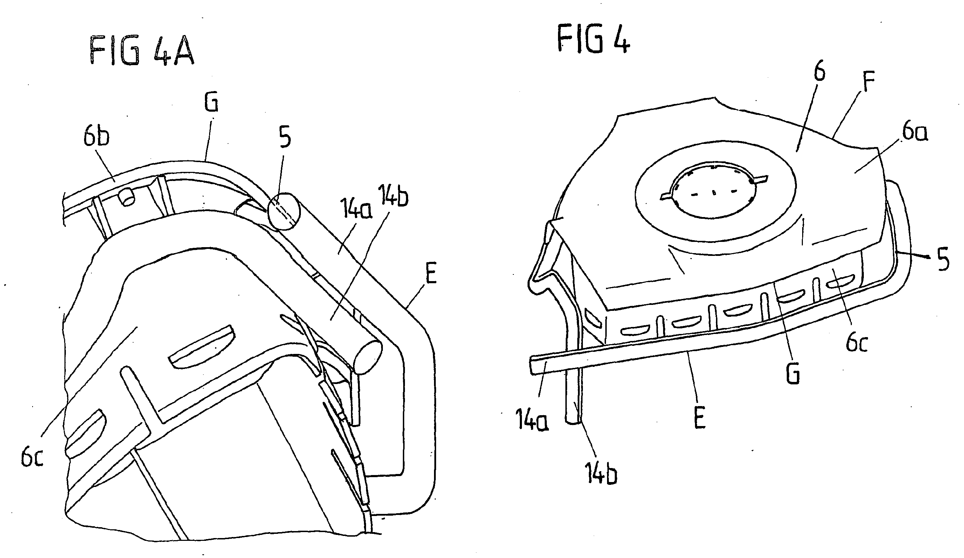

Figur 2 zeigt im Zusammenhang mit Figur 3, 4 und 4a eine schematische, perspektivische Ansicht einer Vorrichtung zum Entfernen eines längs erstreckten Grates G, der von einem Formteil F absteht, welches als eine Airbagabdeckung ausgebildet ist. Die Vorrichtung weist eine in einer Erstreckungsrichtung R längs erstreckt ausgebildete Energiequelle E der in der Figur 1 beschriebenen Art auf, die derart gekrümmt ausgebildet ist, dass sie einen Winkel von 360° einschließt.

Das Formteil F ist kappenförmig ausgebildet und umfasst dementsprechend eine flächig ausgebildete Abdeckplatte, mit einer Oberseite 6a, auf der eine genarbten Oberfläche 6 ausgebildet ist und eine der Oberseite 6a abgewandte Unterseite 6b, von der eine in sich geschossene Seitenwand 6c absteht.

In einem betriebsbereiten Zustand der Vorrichtung (der im Folgenden angenommen werden soll) verläuft die Energiequelle E im Wesentlichen in einer horizontal orientierten Verlaufsebene, wobei die Energiequelle E mittels Befestigungselementen 8, die die Hülle 1 der Energiequelle E an zueinander beabstandeten Bereichen in einer senkrecht zur Erstreckungsrichtung R orientierten Umfangsrichtung umgreifen, an einem Halteelement 9 festgelegt ist, welches eine von der Energiequelle E umschlossene, entlang der Energiequelle E verlaufende Wandung 10 aufweist, die senkrecht auf der Verlaufsebene der Energiequelle E steht und in sich geschlossen ausgebildet ist.

Die Wandung 10 weist eine der Energiequelle E zugewandte Außenseite sowie eine der Außenseite abgewandte Innenseite auf, die über beabstandet zueinander angeordnete' Verbindungselemente 11, die von einem unteren Randbereich der Innenseite der Wandung 10 abstehen, mit einem flächig ausgebildeten Boden 12 des Halteelementes 9 verbunden sind. Der Boden 12 des Halteelementes 9 verläuft hierbei senkrecht zur Wandung 10 und parallel zur Verlaufsebene der Energiequelle E sowie unterhalb der Energiequelle E.

Von dem Boden 12 stehen länglich ausgeformte, freie Schenkel 12a ab, die in einer Erstreckungsebene des Bodens 12 verlaufen und jeweils ein in einer jeweiligen Ersteckungsrichtung des freien Schenkels 12a verlaufendes Langloch L aufweisen, durch das jeweils ein länglich ausgeformtes Standelement S hindurchgeführt ist und am jeweiligen freien Schenkel 12a befestigt ist. Die Stanzelemente S verlaufen jeweils senkrecht zur Erstreckungsebene des Bodens 12 und weisen jeweils zwei freie Endabschnitte 12b, 12c auf, wobei an den in einer senkrecht auf der Erstreckungsebene des Bodens 12 stehenden Richtung unterhalb des Schenkels 12a und des Bodens 12 angeordneten freien Endabschnitten 12b jeweils eine Standoberfläche 12d ausgebildet ist, auf denen das Halteelement 9 im betriebsbereiten Zustand ruht, während an den den freien Endabschnitten 12b jeweils gegenüberliegenden freien Endabschnitten 12c der Standelemente S die Befestigungselemente 8 festgelegt sind, die die Energiequelle E halten.

Die Wandung 10 des Halteelementes 9 ist weiterhin derart ausgeformt, dass sie eine Aufnahme für das Formteil F bildet, welches mit seiner Seitenwand 6c in einer senkrecht auf dem Boden 12 stehenden, auf den Boden 12 weisenden Einführrichtung derart in das Halteelement 9 einführbar ist, dass die Seitenwand 6c des Formteiles F parallel zur Wandung 10 des Haltelements 9 zu liegen kommt. Im in das Halteelement 9 eingeführten Zustand gemäß Figur 3, stützt sich das Formteil F, mit der der Oberseite 6a des Formteiles F abgewandten Unterseite 6b an einem der Unterseite 6b zugewandten oberen Randbereich der Wandung 10 des Haltelelementes 9 ab. Die Position, die das Formteil F in diesem in das Halteelement 9 eingeführten Zustand bezüglich des Halteelementes 9 einnimmt, wird als Bearbeitungsposition bezeichnet.

An vier zueinander beabstandeten Bereichen des Bodens 12, die jeweils benachbart zur Wandung 10 angeordnet sind, steht jeweils ein zylindrisch ausgeformtes Stützelement 13 vom Boden 12 rechtwinklig ab, wobei jene Stützelemente 13 jeweils an einem freien Ende kegelartig verjüngt ausgebildet sind. Die vier Stützelemente 13 spannen einen trapezförmigen Bereich auf und dienen, wie aus Figur 2 und 3 ersichtlich, mit ihren freien Enden als zusätzliche Lager für das Formteil F, welches im in das Halteelement 9 eingeführten Zustand (gemäß Figur 3) mit der Unterseite 6b seiner Abdeckplatte auf den freien Enden der Stützelemente 13 aufliegt. Weiterhin verläuft bei einem Formteil F, welches sich in der Bearbeitungsposition befindet, die Seitenwand 6c des Formteiles F zwischen den Stützelementen 13 und der Wandung 10 des Halteelementes 9.

Die Oberseite 6a des in der Bearbeitungsposition angeordneten Formteiles F ist dem Boden 12 des Halteelementes 9 abgewandt und verläuft im Wesentlichen in einer Erstreckungsebene, die parallel zur Verlaufsebene der Energiequelle E orientiert ist. An dem Formteil F ist ein längs erstreckten Grat G ausgebildet, der in einer Umfangsrichtung des Formteiles F verlaufend eine Berandung der genarbten Oberfläche 6 des Formteiles F bildet, die der Energiequelle E zugewandt ist und ferner eine Unterteilung zwischen der Oberseite 6a und der dem Boden 12 des Halteelementes 9 zugewandten Unterseite 6b des Formteiles F bildet. Die Energiequelle E weist, wie in der Figur 1 beschrieben, eine äußere Beschichtung 3 auf, die an einer dem Grat G zugewandten Seite der Energiequelle E derart partiell entfernt ist, dass ein entlang der Energiequelle E verlaufender Spalt 5 gebildet ist, der dem längs erstreckten Grat G gegenüber liegt und einer gekrümmten Bahn des Grates G folgend entlang des Grates G angeordnet ist, wobei die Energiequelle E mit dem daran ausgebildeten Austrittsbereich (Spalt 5) einen Winkel von 360° einschließt. Die Energiequelle E kann hierbei (so wie der daran ausgebildete Spalt 5) einen in sich geschlossenen Verlauf aufweisen oder wie insbesondere in der Figur 4 und der Figur 4a dargestellt, zwei freie, einander kreuzende und zueinander beabstandete freie Endabschnitte 14a, 14b aufweisen. D.h., die Energiequelle E verläuft ausgehend von einem solchen freien Endabschnitt 14a, einer gekrümmten Bahn des Grates G folgend und einen Winkel von 360° einschließend, bis zu einem weiteren freien Endabschnitt 14b, der den ersten freien Endabschnitt 14a im Wesentlichen rechtwinklig kreuzt. Hierdurch kann ebenso wie bei einem geschlossenen Verlauf der Energiequelle E (und des Austrittsbereiches 5) die Energiequelle mit ihrem Austrittsbereich 5 derart bezüglich des längs erstreckten Grates G angeordnet werden, dass der Austrittsbereich 5 senkrecht zu seiner Erstreckungsrichtung R einen konstanten Abstand zum Grat G aufweist. Eine betragsmäßige Variation dieses Abstandes kann hierbei lediglich im Bereich einer Überkreuzung der beiden freien Endabschnitte 14a, 14b entstehen, da an dieser Stelle der Austrittsbereich 5 nicht in sich geschlossen verlaufen kann (da die beiden freien Endabschnitte 14a, 14b voneinander beabstandet sind).

Zum Entfernen des längs erstreckten, an dem Formteil F ausgebildeten Grates G wird das Formteil F in Einführrichtung auf das Halteelement 9 aufgesetzt, so dass die dem Boden 12 des Halteelementes 9 zugewandte Unterseite 6b des Formteiles F auf dem oberen Randbereich der Wandung 10 des Haltelementes 9 aufliegt sowie von den Stützelementen 13 an vier voneinander beabstandeten Bereichen gestützt wird. Das Führen des Formteiles F in diese durch das Halteelement 9 fixierbare Bearbeitungsposition kann manuell oder durch eine automatisierte Führung erfolgen.

Befindet sich das Formteil F in seiner Bearbeitungsposition, in der der längs erstreckte Grat G des Formteiles F entlang des durch den Spalt 5 gebildeten Austrittsbereiches der Energiequelle E verläuft, wird der IR-Strahler 2 der Energiequelle E aktiviert, d. h., durch Anlegen einer Spannung zum Aussenden von IR-Strahlung 7 angeregt, die durch den Spalt 5 derart auf den Grat G konzentriert wird, dass der Grat G erwärmt wird und mit einem in Erstreckungsrichtung R längs erstreckt verlaufenden Entfernungsbereich, der den Grat G beinhaltet, verschmolzen wird. Hierdurch wird der längs erstreckte Grat G entfernt. Es ist denkbar, bei komplizierten Verläufen eines längs erstreckten Grates G, den Grat G in mehreren Entfernungsprozessen zu entfernen. Hierzu können mehrere der beschriebenen Vorrichtungen verwendet werden, wobei in jeder dieser Vorrichtungen ein bestimmter Abschnitt des Verlaufes des längs erstreckten Grates entfernt wird. D.h., eine jede dieser Vorrichtungen weist einen Austrittsbereich einer Energiequelle auf, der derart ausgebildet ist, dass er einer Bahnkurve eines Abschnittes des zu entfernenden längs erstreckten Grates folgend, entlang dieses Abschnittes anordenbar ist. Hierbei kann eine automatisierte Führung das Formteil F in eine erste Vorrichtung zur Entfernung eines ersten Abschnittes des längs erstreckten Grates G führen und nach Entfernen dieses ersten Abschnittes in eine weitere, zweite Vorrichtung verbringen, in der ein weiterer, von dem ersten Abschnitt verschiedener zweiter Abschnitt des Grates G entfernt wird. Auf diese Weise kann ein längs erstreckte Grat G, der einen komplizierten Verlauf aufweist, in einem mehrstufigen, voll automatisierbaren Prozess durch sukzessives Schmelzen einzelner, ausgedehnter (und voneinander verschiedener) Abschnitte des Grates G entfernt werden.

### Bezugszeichenliste

- 1: Hülle
- 2: IR-Strahler
- 3: Äußere Beschichtung
- 4: Innenseite
- 5: Spalt
- 6: Oberfläche
- 6a: Oberseite
- 6b: Unterseite
- 6c: Seitenwand
- 7: IR-Strahlung
- 8: Befestigungselement
- 9: Halteelement
- 10: Wandung
- 11: Verbindungselemente
- 12: Boden
- 12a: Freier Schenkel
- 12b: Freier Endabschnitt
- 12c: Freier Endabschnitt
- 12d: Standoberfläche
- 13: Stützelement
- 14a: Freier Endabschnitt
- 14b: Freier Endabschnitt
- F: Formteil
- G: Längs erstreckter Grat
- G': Seite
- E: Energiequelle
- R: Erstreckungsrichtung
- B: Spaltbreite
- W: Winkel
- L: Langloch
- S: Standelement

## Patentansprüche

1. Vorrichtung zum Entfernen eines längs erstreckten Grates an einem Formteil, mit einer Energiequelle, die zum Entfernen des Grates durch Erhitzen Energie in den Grat einbringt wobei die Energiequelle (E) einen IR-Strahler aufweist (2), mit dem Energie in Form von IR-Strahlung (7) auf den längs erstreckten Grat (G) eingestrahlt werden kann, und eine Hülle (1) zur Aufnahme des IR-Strahlers (2), mit einer dem IR-Strahler (2) zugewandten Innenseite und einer dem IR-Strahler (2) abgewandten Außenseite, und wobei die Energiequelle einen Austrittsbereich aufweist, durch den hindurch Energie in Richtung des Grates transportierbar ist,
**dadurch gekennzeichnet,**
- **dass** die Hülle (1) eine äußere Beschichtung (3) mit einer dem Außenraum zugewandten Oberfläche und einer dem IR-Strahler (2) zugewandten Innenseite aufweist, die die Hülle (1) zumindest teilweise umhüllt, und
- wobei der Austrittsbereich durch einen Spalt (5) in der äußeren Beschichtung (3) gebildet ist, der derart längs erstreckt ausgebildet ist, dass er entlang des längs erstreckten Grates (G), einer Bahn des Grates folgend, anordenbar ist, und
- wobei eine von der Energiequelle (E) ausgesandte IR-Strahlung mittels eines strahlformenden Elementes derart bündelbar ist, dass lediglich der Grat (G) durch die IR-Strahlung (7) bestrahlt wird, und
- wobei das strahlformende Element durch den Spalt (5) in der äußeren Beschichtung gebildet ist.

2. Vorrichtung nach Anspruch 1, **dadurch gekennzeichnet, dass** der Austrittsbereich (5) gekrümmt ist, so dass er entlang eines längs erstreckten Grates (G), einer gekrümmten Bahn des Grates folgend, anordenbar ist.

3. Vorrichtung nach Anspruch 1 oder 2, **dadurch gekennzeichnet, dass** der Austrittsbereich (5) einen Winkel von mindestens 180° einschließt.

4. Vorrichtung nach einem der vorangegangenen Ansprüche, **dadurch gekennzeichnet, dass** der Austrittsbereich (5) sich entlang einer geschlossenen Bahnkurve erstreckt.

5. Vorrichtung nach einem der vorangegangenen Ansprüche, **dadurch gekennzeichnet, dass** der Austrittsbereich (5) einen Winkel von 360° einschließt.

6. Vorrichtung nach einem der vorangegangenen Ansprüche, **dadurch gekennzeichnet, dass** der Austrittsbereich längs erstreckt in einer Erstreckungsrichtung (R) ausgebildet ist, so dass er senkrecht zur Erstreckungsrichtung (R) in einem konstanten Abstand zu einem längs erstreckten Grat (G) anordenbar ist.

7. Vorrichtung nach einem der vorangegangenen Ansprüche, **dadurch gekennzeichnet, dass** die Energiequelle (E) derart ausgebildet ist, dass eine Übertragung der Energie auf das Formteil (F) mittels der Energiequelle (E) auf den Grat (G) konzentrierbar ist.

8. Vorrichtung nach einem der vorangegangenen Ansprüche, **dadurch gekennzeichnet, dass** der IR-Strahler (2) als ein längs erstreckter Draht ausgebildet ist.

9. Vorrichtung nach Anspruch 8, **dadurch gekennzeichnet, dass** der IR-Strahler (2) längs erstreckt entlang des Austrittsbereiches (5) verläuft.

10. Vorrichtung nach einem der vorangegangenen Ansprüche, **dadurch gekennzeichnet, dass** die Hülle (1) aus einem Glas besteht.

11. Vorrichtung nach einem der vorangegangenen Ansprüche, **dadurch gekennzeichnet, dass** eine von der Energiequelle (E) ausgesandte IR-Strahlung (7) mittels des strahlformenden Elementes auf einen den Grat (G) beinhaltenden Entfernungsbereich des Formteiles (F) beschränkbar ist.

12. Vorrichtung nach einem der vorangegangenen Ansprüche, **dadurch gekennzeichnet, dass** die Innenseite der äußeren Beschichtung (3) als ein Reflektor zum Reflektieren einer von dem IR-Strahler (2) ausgesandten IR-Strahlung (7) ausgebildet ist.

13. Vorrichtung nach einem der vorangegangenen Ansprüche, **dadurch gekennzeichnet, dass** die äußere Beschichtung (3) aus Gold und / oder einer Goldlegierung besteht.

14. Vorrichtung nach einem der vorangegangenen Ansprüche, **gekennzeichnet durch** ein Halteelement (9), mittels dessen das Formteil (F) mit seinem Grat (G) in einer vordefinierbaren Lage bezüglich des Austrittsbereiches (5) der Energiequelle (E) positionierbar ist.

15. Anordnung zum Entfernen eines längs erstreckten Grates an einem Formteil mit einer Vorrichtung nach einem der vorangegangenen Ansprüche, wobei das Formteil (F) derart bezüglich des Austrittsbereiches (5) positioniert ist, dass der Austrittsbereich (5), einer Bahn des Grates (G) folgend, entlang des Grates (G) verläuft.

16. Anordnung nach Anspruch 15, **dadurch gekennzeichnet, dass** der Grat (G) in einer Erstreckungsrichtung (R) längs erstreckt ausgebildet ist und in Erstreckungsrichtung (R) in sich geschlossen ist.

17. Anordnung nach Anspruch 15 oder 16, **dadurch gekennzeichnet, dass** der Grat (G) in einer Umfangsrichtung des Formteiles (F) entlang einer Oberfläche des Formteiles verläuft.

18. Anordnung nach einem der Ansprüche 15 bis 17, **dadurch gekennzeichnet, dass** das Formteil (F) als eine Airbagabdeckung ausgebildet ist.

19. Verfahren zum Entfernen eines längs erstreckten Grates an einem Formteil, welches die folgenden Schritte umfasst:
- Bereitstellen eines Formteiles (F) mit einem längs erstreckten Grat (G),
- Positionieren des Formteiles (F) bezüglich einer Energiequelle (E) in einer Bearbeitungsposition derart, dass ein dem Grat (G) zugewandter, in einer Erstreckungsrichtung (R) verlaufender Austrittsbereich (5) der Energiequelle (E), durch den hindurch die Energie zum Grat (G) transportiert werden kann, längs erstreckt entlang des Grates (G) verläuft, wobei die Energiequelle (E) einen IR-Strahler aufweist (2), mit dem die Energie in Form von IR-Strahlung (7) auf den längs erstreckten Grat (G) eingestrahlt wird, und eine Hülle (1) zur Aufnahme des IR-Strahlers (2), mit einer dem IR-Strahler (2) zugewandten Innenseite und einer dem IR-Strahler (2) abgewandten Außenseite, wobei die Hülle (1) eine äußere Beschichtung (3) mit einer dem Außenraum zugewandten Oberfläche und einer dem IR-Strahler (2) zugewandten Innenseite aufweist, die die Hülle (1) zumindest teilweise umhüllt, und wobei der Austrittsbereich der Energiequelle durch einen Spalt (5) in der äußeren Beschichtung (3) der Hülle (1) gebildet ist, und
- Entfernen des Grates (G) durch Einbringen der Energie in den Grat (G) entlang des Spaltes (5), wobei eine von der Energiequelle (E) ausgesandte IR-Strahlung mittels eines strahlformenden Elementes derart bündelbar ist, dass lediglich der Grat (G) durch die IR-Strahlung (7) bestrahlt wird, und wobei das strahlformenden Element durch den Spalt (5) in der äußeren Beschichtung gebildet ist.

20. Verfahren nach Anspruch 19, **dadurch gekennzeichnet, dass** die Energie durch die Energiequelle (E) gleichzeitig auf eine gesamte Länge des Grates (G) übertragen wird.

21. Verfahren nach Anspruch 19 oder 20, **dadurch gekennzeichnet, dass** der Grat (G) derart bezüglich der Energiequelle (E) in der Bearbeitungsposition positioniert wird, dass der Austrittsbereich (5) senkrecht zur Erstreckungsrichtung (R) eine im Wesentlichen konstante Beabstandung zum Grat (G) aufweist.

22. Verfahren nach einem der vorangegangenen Ansprüche, **dadurch gekennzeichnet, dass** die Energie derart auf das Formteil (F) übertragen wird, dass die Energie auf den Grat (G) konzentriert wird.

23. Verfahren nach einem der vorangegangenen Ansprüche, **dadurch gekennzeichnet, dass** der Grat (G) mittels der Energiequelle (E) mit einer IR-Strahlung (7) bestrahlt wird.

24. Verfahren nach Anspruch 23, **dadurch gekennzeichnet, dass** ein den Grat (G) beinhaltender Entfernungsbereich des Formteiles (F) mit der IR-Strahlung (7) derart bestrahlt wird, dass der Grat (G) mit dem Entfernungsbereich verschmolzen und **dadurch** entfernt wird.

25. Verfahren nach Anspruch 23, **dadurch gekennzeichnet, dass** die IR-Strahlung (7) derart auf den Grat (G) fokussiert wird, dass lediglich der Grat (G) mit der IR-Strahlung (7) bestrahlt wird, wobei der Grat (G) mit einem den Grat (G) beinhaltenden Entfernungsbereich des Formteiles (F) verschmolzen wird.

26. Verfahren nach Anspruch 23, **dadurch gekennzeichnet, dass** die IR-Strahlung (7) derart auf den Grat (G) fokussiert wird, dass der Grat (G) mit der IR-Strahlung (7) bestrahlt wird, wodurch der Grat (G) verbrannt und somit entfernt wird.

27. Verfahren nach einem der Ansprüche 19 bis 26, **gekennzeichnet durch** die folgenden Schritte:
- Führen des Formteiles (F) in die Bearbeitungsposition,
- Halten des Formteiles (F) in der Bearbeitungsposition mittels eines Halteelementes (9), und
- Bestrahlen des Grates (G) mit IR-Strahlung (7).

28. Verfahren nach einem der Ansprüche 19 bis 27, **dadurch gekennzeichnet, dass** das Formteil (F) mittels eines Führungsmittels in die Bearbeitungsposition geführt wird.

## Claims

1. A device for removing an oblong burr from a molded part, comprising an energy source, which introduces energy into the burr for removing the burr by heating, the energy source (E) comprising an infrared transmitter (2) by means of which energy in the form of infrared radiation (7) may be irradiated onto the oblong burr (G) and a sleeve (1) for receiving the infrared transmitter (2) with an inner face facing the infrared transmitter (2) and an outer face facing away from the infrared transmitter (2), and the energy source having an outlet region through which energy may be transported in the direction of the burr, **characterized**
- **in that** the sleeve (1) has an outer coating (3) with a surface facing the outside and an inner face facing the infrared transmitter (2), said outer coating (3) at least partially encloses the sleeve (1), and
- the outlet region being formed by a gap (5) in the outer coating (3), which is of oblong configuration such that it may be arranged along the oblong burr (G) following a path of the burr, and
- infrared radiation emitted by the energy source (E) being able to be concentrated by means of a radiation-forming element, such that only the burr (G) is irradiated by the infrared radiation (7), and
- the radiation-forming element being formed by the gap (5) in the outer coating.

2. The device as claimed in claim 1, **characterized in that** the outlet region (5) is curved, so that it may be arranged along an oblong burr (G), following a curved path of the burr.

3. The device as claimed in claim 1 or 2, **characterized in that** the outlet region (5) encloses an angle of at least 180°.

4. The device as claimed in one of the preceding claims, **characterized in that** the outlet region (5) extends along an enclosed curved path.

5. The device as claimed in one of the preceding claims, **characterized in that** the outlet region (5) encloses an angle of 360°.

6. The device as claimed in one of the preceding claims, **characterized in that** the outlet region is of oblong configuration in a direction of extension (R), so that it may be arranged perpendicular to the direction of extension (R) with a uniform spacing from an oblong burr (G).

7. The device as claimed in one of the preceding claims, **characterized in that** the energy source (E) is configured such that a transmission of the energy to the molded part (F) by means of the energy source (E) may be concentrated on the burr (G).

8. The device as claimed in one of the preceding claims, **characterized in that** the infrared transmitter (2) is configured as an elongate wire.

9. The device as claimed in claim 8, **characterized in that** the infrared transmitter (2) extends longitudinally along the outlet region (5).

10. The device as claimed in one of the preceding claims, **characterized in that** the sleeve (1) consists of a glass.

11. The device as claimed in one of the preceding claims, **characterized in that** infrared radiation (7) emitted by the energy source (E) may be restricted by means of the radiation-forming element to a removal region of the molded part (F) containing the burr (G).

12. The device as claimed in one of the preceding claims, **characterized in that** the inner face of the outer coating (3) is configured as a reflector for reflecting infrared radiation (7) emitted by the infrared transmitter (2).

13. The device as claimed in one of the preceding claims, **characterized in that** the outer coating (3) consists of gold and/or a gold alloy.

14. The device as claimed in one of the preceding claims, **characterized by** a retaining element (9) by means of which the molded part (F) may be positioned with its burr (G) in a predefinable position relative to the outlet region (5) of the energy source (E).

15. An arrangement for removing an oblong burr from a molded part comprising a device as claimed in one of the preceding claims, the molded part (F) being positioned relative to the outlet region (5) such that the outlet region (5) extends along the burr (G), following a path of the burr (G).

16. The arrangement as claimed in claim 15, **characterized in that** the burr (G) is of oblong configuration in a direction of extension (R) and is enclosed in the direction of extension (R).

17. The arrangement as claimed in claim 15 or 16, **characterized in that** the burr (G) extends in a peripheral direction of the molded part (F) along a surface of the molded part.

18. The arrangement as claimed in one of claims 15 to 17, **characterized in that** the molded part (F) is configured as an airbag cover.

19. A method for removing an oblong burr from a molded part which comprises the following steps:
- providing a molded part (F) with an oblong burr (G),
- positioning the molded part (F) relative to an energy source (E) in a machining position, such that an outlet region (5) of the energy source (E), facing the burr (G) and extending in a direction of extension (R), through which energy may be transported to the burr (G), extends longitudinally along the burr (G), the energy source (E) comprising an infrared transmitter (2) by means of which the energy in the form of infrared radiation (7) is irradiated onto the oblong burr (G) and a sleeve (1) for receiving the infrared transmitter (2) with an inner face facing the infrared transmitter (2) and an outer face facing away from the infrared transmitter (2), the sleeve (1) having an outer coating (3) with a surface facing the outside and an inner face facing the infrared transmitter (2), said outer coating (3) at least partially encloses the sleeve (1), and the outlet region of the energy source being formed by a gap (5) in the outer coating (3) of the sleeve (1), and
- removal of the burr (G) by introducing the energy into the burr (G) along the gap (5), infrared radiation emitted by the energy source (E) being able to be concentrated by means of a radiation-forming element, such that only the burr (G) is irradiated by the infrared radiation (7), and the radiation-forming element being formed by the gap (5) in the outer coating.

20. The method as claimed in claim 19, **characterized in that** the energy is transmitted by the energy source (E) simultaneously over the entire length of the burr (G).

21. The method as claimed in claim 19 or 20, **characterized in that** the burr (G) is positioned relative to the energy source (E) in the machining position, such that the outlet region (5) perpendicular to the direction of extension (R) has a substantially uniform spacing from the burr (G).

22. The method as claimed in one of the preceding claims, **characterized in that** the energy is transmitted to the molded part (F), such that the energy is concentrated on the burr (G).

23. The method as claimed in one of the preceding claims, **characterized in that** the burr (G) is irradiated by means of the energy source (E) with infrared radiation (7).

24. The method as claimed in claim 23, **characterized in that** a removal region of the molded part (F) containing the burr (G) is irradiated by the infrared radiation (7) such that the burr (G) is melted with the removal region and is thereby removed.

25. The method as claimed in claim 23, **characterized in that** the infrared radiation (7) is focused onto the burr (G) such that only the burr (G) is irradiated by the infrared radiation (7), the burr (G) being melted with a removal region of the molded part (F) containing the burr (G).

26. The method as claimed in claim 23, **characterized in that** the infrared radiation (7) is focused onto the burr (G), such that the burr (G) is irradiated by the infrared radiation (7), whereby the burr (G) is burnt and thus removed.

27. The method as claimed in one of claims 19 to 26, **characterized by** the following steps:
- guiding the molded part (F) into the machining position,
- retaining the molded part (F) in the machining position, by means of a retaining element (9), and
- irradiating the burr (G) with infrared radiation (7).

28. The method as claimed in one of claims 19 to 27, **characterized in that** the molded part (F) is guided by means of a guide means into the machining position.

## Revendications

1. Dispositif pour éliminer une bavure allongée sur une pièce moulée, comprenant une source d'énergie qui injecte de l'énergie dans la bavure pour éliminer ladite bavure par échauffement, ladite source d'énergie (E) comprenant un dispositif de rayonnement infrarouge (2) au moyen duquel de l'énergie sous forme de rayonnement infrarouge (7) peut être appliquée à la bavure allongée (G), et une enveloppe (1) pour loger le dispositif de rayonnement infrarouge (2), qui présente une face intérieure tournée vers le dispositif de rayonnement infrarouge (2) et une face extérieure détournée du dispositif de rayonnement infrarouge (2), et dans lequel la source d'énergie comprend une zone de sortie à travers laquelle de l'énergie peut être transportée en direction de la bavure,
**caractérisé en ce que**
- l'enveloppe (1) comporte un revêtement extérieur (3) avec une surface tournée vers l'extérieur et une face intérieure tournée vers le dispositif de rayonnement infrarouge (2), qui entoure au moins partiellement l'enveloppe (1), et
- la zone de sortie est formée par une fente (5) réalisée dans le revêtement extérieur (3), laquelle est réalisée sous forme allongée de telle façon qu'elle peut être agencée le long de la bavure allongée (G) en suivant un profil de la bavure, et
- un rayonnement infrarouge émis par la source d'énergie (E) est susceptible d'être focalisé au moyen d'un élément qui met en forme le rayonnement de telle façon que seule la bavure (G) est atteinte par le rayonnement infrarouge (7), et
- l'élément qui met en forme le rayonnement est formé par la fente (5) réalisée dans le revêtement extérieur.

2. Dispositif selon la revendication 1, **caractérisé en ce que** la zone de sortie (5) est incurvée de telle façon qu'elle peut être agencée le long d'une bavure allongée (G), en suivant un profil incurvé de la bavure.

3. Dispositif selon la revendication 1 ou 2, **caractérisé en ce que** la zone de sortie (5) s'étend selon une plage angulaire d'au moins 180°.

4. Dispositif selon l'une des revendications précédentes, **caractérisé en ce que** la zone de sortie (5) s'étend le long d'un profil courbe fermé.

5. Dispositif selon l'une des revendications précédentes, **caractérisé en ce que** la zone de sortie (5) s'étend selon une plage angulaire de 360°.

6. Dispositif selon l'une des revendications précédentes, **caractérisé en ce que** la zone de sortie est réalisée de manière allongée selon une direction d'extension (R), de sorte qu'elle peut être agencée à une distance constante d'une bavure allongée (G), perpendiculairement à la direction d'extension (R).

7. Dispositif selon l'une des revendications précédentes, **caractérisé en ce que** la source d'énergie (E) est réalisée de telle façon que la transmission de l'énergie vers la pièce moulée (F) au moyen de la source d'énergie (E) peut être concentrée sur la bavure (G).

8. Dispositif selon l'une des revendications précédentes, **caractérisé en ce que** le dispositif de rayonnement infrarouge (2) est réalisé sous la forme d'un fil allongé.

9. Dispositif selon la revendication 8, **caractérisé en ce que** le dispositif de rayonnement infrarouge (2) s'étend de manière allongée le long de la zone de sortie (5).

10. Dispositif selon l'une des revendications précédentes, **caractérisé en ce que** l'enveloppe (1) est en verre.

11. Dispositif selon l'une des revendications précédentes, **caractérisé en ce qu'**un rayonnement infrarouge (7) émis par la source d'énergie (E) est susceptible d'être limité au moyen de l'élément qui met en forme le rayonnement sur une zone d'élimination de la pièce moulée (F) qui contient la bavure (G).

12. Dispositif selon l'une des revendications précédentes, **caractérisé en ce que** la face intérieure du revêtement extérieur (3) est réalisée sous la forme d'un réflecteur destiné à réfléchir un rayonnement infrarouge (7) émis par le dispositif de rayonnement infrarouge (2).

13. Dispositif selon l'une des revendications précédentes, **caractérisé en ce que** le revêtement extérieur (2) et en or et/ou en un alliage d'or.

14. Dispositif selon l'une des revendications précédentes, **caractérisé par** un élément de maintien (9) au moyen duquel la pièce moulée (F) peut être positionnée avec sa bavure (G) dans une position prédéfinie par rapport à la zone de sortie (5) de la source d'énergie (E).

15. Agencement pour éliminer une bavure allongée sur une pièce moulée au moyen d'un dispositif selon l'une des revendications précédentes, dans lequel la pièce moulée (F) est positionnée par rapport à la zone de sortie (5) de telle façon que la zone de sortie (5) s'étend le long de la bavure (G) en suivant un profil de cell-ci (G).

16. Agencement selon la revendication 15, **caractérisé en ce que** la bavure (G) est réalisée de manière allongée dans une direction d'extension (R), et est fermée sur elle-même dans la direction d'extension (R).

17. Agencement selon la revendication 15 ou 16, **caractérisé en ce que** la bavure (G) s'étend dans une direction périphérique de la pièce moulée (F) le long d'une surface de celle-ci.

18. Agencement selon l'une des revendications 15 à 17, **caractérisé en ce que** la pièce moulée (F) se présente sous la forme d'un couvercle d'airbag.

19. Procédé pour éliminer une bavure allongée sur une pièce moulée, qui comprend les étapes suivantes :
- on prépare une pièce moulée (F) avec une bavure allongée (G),
- on positionne la pièce moulée (F) par rapport à une source d'énergie (E) dans une position de travail de telle façon qu'une zone de sortie (5) de la source d'énergie (E), tournée vers la bavure (G), s'étendant dans une direction d'extension (R), et à travers laquelle l'énergie peut être transportée vers la bavure (G), s'étend de manière allongée le long de la bavure (G), la source d'énergie (E) comprenant un dispositif de rayonnement infrarouge (2), au moyen duquel l'énergie est appliquée sous forme de rayonnement infrarouge (7) à la bavure allongée (G), et une enveloppe (1) pour recevoir le dispositif de rayonnement infrarouge (2), avec une face intérieure tournée vers le dispositif de rayonnement infrarouge (2) et une face extérieure détournée du dispositif de rayonnement infrarouge (2), la enveloppe (1) présentant un revêtement extérieur (3) avec une surface tournée vers extérieur et une face intérieure tournée vers le dispositif de rayonnement infrarouge (2), qui entoure au moins partiellement l'enveloppe (1), la zone de sortie de la source d'énergie étant formée par une fente (5) réalisée dans le revêtement extérieur (3) de l'enveloppe (1), et
- on élimine la bavure (G) par application de l'énergie dans la bavure (G) le long de la fente (5), le rayonnement infrarouge émis par la source d'énergie (E) étant susceptible d'être focalisé au moyen d'un élément qui met en forme le rayonnement de telle façon que seule la bavure (G) est insolée par le rayonnement infrarouge (7), ledit élément qui met en forme le rayonnement étant formé par la fente (5) réalisée dans le revêtement extérieur.

20. Procédé selon la revendication 19, **caractérisé en ce que** l'énergie est transmise par la source d'énergie (E) simultanément sur toute une longueur de la bavure (G).

21. Procédé selon la revendication 19 ou 20, **caractérisé en ce que** la bavure (G) est positionnée dans la position de travail par rapport à la source d'énergie (E) de telle façon que la zone de sortie (5) présente un écartement sensiblement constant par rapport à la bavure (G), perpendiculairement à la direction d'extension (R).

22. Procédé selon l'une des revendications précédentes, **caractérisé en ce que** l'énergie est transmise à la pièce moulée (F) de telle façon que l'énergie est concentrée sur la bavure (G).

23. Procédé selon l'une des revendications précédentes, **caractérisé en ce que** la bavure (G) est soumise à un rayonnement infrarouge (7) au moyen de la source d'énergie (E).

24. Procédé selon la revendication 23, **caractérisé en ce qu'**une zone d'élimination, qui contient la bavure (G), de la pièce moulée (F) est soumise au rayonnement infrarouge (7) de telle façon que la bavure (G) est mise en fusion avec la zone d'élimination et est ainsi éliminée.

25. Procédé selon la revendication 23, **caractérisé en ce que** le rayonnement infrarouge (7) est focalisé sur la bavure (G) de telle façon que seule la bavure (G) reçoit le rayonnement infrarouge (7), et la bavure (G) est mise en fusion avec une zone d'élimination de la pièce moulée (F) qui contient la bavure (G).

26. Procédé selon la revendication 23, **caractérisé en ce que** le rayonnement infrarouge (7) est focalisé sur la bavure (G) de telle façon que la bavure (G) est soumise au rayonnement infrarouge (7), en raison de quoi la bavure (G) est amenée à brûler et est ainsi éliminée.

27. Procédé selon l'une des revendications 19 à 26, **caractérisé par** les étapes suivantes :
- on amène la pièce moulée (R) dans la position de travail,
- on maintient la pièce moulée (F) dans la position de travail au moyen d'un élément de maintien (9), et
- on soumet la bavure (G) au rayonnement infrarouge (7).

28. Procédé selon l'une des revendications 19 à 27, **caractérisé en ce que** la pièce moulée (F) est amenée dans la position de travail au moyen d'un organe de guidage.
